# EUROPEAN PATENT APPLICATION

(11) **EP 1 643 631 A1**
(43) Date of publication of application: **05.04.2006**
(21) Application number: 05021219.0
(22) Date of filing: 29.09.2005
(51) Int. Cl.: H02P 27/06, H02M 7/06, F24F 11/02

(54) **Power supply circuit for an air conditioner**

(30) Priority: 01.10.2004 JP 2004289761
(71) Applicant: MATSUSHITA ELECTRIC INDUSTRIAL CO., LTD., Kadoma-shi, Osaka 571-8501 (JP)
(72) Inventor: Fukunishi, Takahiro, Kusatsu-shi Shiga 525-0037 (JP)
(74) Representative: Eisenführ, Speiser & Partner

(57) **Abstract**

A first smoothing capacitor (6) and a second smoothing capacitor (7) are connected via first and second diodes (8,9) provided in a current flowing direction from the first smoothing capacitor to the second smoothing capacitor. Thus, even when the inverter circuit (13) is stopped in driving by cutting off an AC power supply, electric charges stored in the first smoothing capacitor can be discharged reliably.

## Description

### BACKGROUND OF THE INVENTION

### Field of the Invention

The present invention relates to an air conditioner having a power supply device using a bridge rectifying circuit system.

### Description of the Related Art

As a conventional air conditioner, there is disclosed a construction example as shown in Fig. 3 (see, for example, Japanese Patent Application Laid-open No. 2004-125282). In Fig. 3, an AC power source 1 is connected to a bridge rectifying circuit 4 formed of four pieces of diodes, via a reactor 3 for improving a power factor. A DC output terminal of the bridge rectifying circuit 4 is connected with a smoothing capacitor 6. An output voltage of the bridge rectifying circuit 4 is commonly supplied to both a DC-DC converter circuit 10 and an inverter circuit 13 where the inverter circuit 13 is connected with a compressor 14. An output voltage of the DC-DC converter circuit 10 is supplied to a controller 16 which includes an inverter driving unit 11 for driving the inverter circuit 13 so that the driving of the inverter circuit 13 is controlled.

However, in this conventional configuration, since the output of the bridge rectifying circuit 4 is commonly used as a power supply for both the DC-DC converter circuit 10 and the inverter circuit 13, an input voltage range of the DC-DC converter circuit 10 is affected by a voltage drop caused by the reactor 3. Therefore, there is a problem that a restriction in design exists at the time of full-wave rectification.

Further, since the inverter circuit 13 is always electrically conducted, if a stray capacitance (not shown) exists between the compressor 14 and the ground (not shown), there is a problem that a leakage current is caused from the compressor 14.

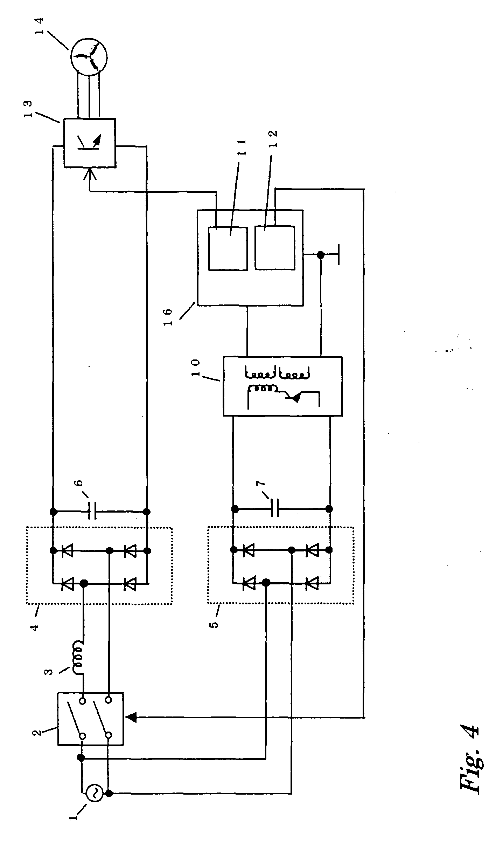

As an improved technique to solve these problems, there has been considered a configuration as shown in Fig.4 such that a second bridge rectifying circuit 5 formed of four pieces of diodes is also connected to the AC power source 1, and an input power of the DC-DC converter 10 is supplied from a DC output terminal of the second bridge rectifying circuit 5. Thus, the input voltage range of the DC-DC converter 10 is stabilized without being affected by the reactor 3. On the other hand, a switch portion 2 is connected between the reactor 3 and the AC power source 1, and when the compressor 14 is not driven, the switch portion 2 is cut off by means of a switch driving unit 12 which is provided in the controller 16. Thus, a leakage current which may be caused when the compressor 14 is not driven, can be reduced.

In this case, however, there exists few output load of the first bridge rectifying circuit 4 when the compressor 14 is not driven, and electric charges held in the smoothing capacitor 6 are not discharged. Therefore, when an air conditioner is repaired or subject to maintenance, there is a need to discharge the electric charges from the smoothing capacitor 6 beforehand, and this is troublesome.

The present invention has been made to solve the above conventional problems, and an object of the present invention is to provide an air conditioner having a power supply device using a bridge rectifying circuit system, which enables to stabilize an input voltage range of a DC-DC converter circuit, to easily discharge a smoothing capacitor when an inverter circuit is not driven, and to reduce a leakage current from a compressor when the inverter circuit is not driven, with a simple configuration.

In order to achieve the object mentioned above, an air conditioner according to one aspect of the present invention includes: a first bridge rectifying circuit for full-wave rectification of an output voltage of an AC power source supplied through a reactor for improving a power factor; a second bridge rectifying circuit for full-wave rectification directly supplied with an output voltage from the AC power source; a first smoothing capacitor connected between DC output terminals of the first bridge rectifying circuit; a second smoothing capacitor connected between DC output terminals of the second bridge rectifying circuit; an inverter circuit connected to the DC output terminals of the first bridge rectifying circuit for driving a compressor; a DC-DC converter circuit connected to the DC output terminals of the second bridge rectifying circuit; and a controller for controlling a drive of the inverter circuit, said controller being connected to the DC output terminals of the second bridge rectifying circuit via the DC-DC converter circuit, thereby supplying electric power to the DC-DC converter circuit and the controller.

In this arrangement, the air conditioner is characterized by comprising first and second diodes which are connected between the DC output terminals of the first and second bridge rectifying circuits, wherein the first diode is connected in a current flowing direction from a positive terminal side of the DC output terminals of the first bridge rectifying circuit to a positive terminal side of the DC output terminals of the second bridge rectifying circuit, and the second diode is connected in a current flowing direction from a negative terminal side of the DC output terminals of the second bridge rectifying circuit to a negative terminal side of the DC output terminals of the first bridge rectifying circuit.

In a preferable aspect, the air conditioner may further include: a switch portion connected between the AC power source and the reactor; and a DC voltage detecting portion connected to the DC output terminals of the first bridge rectifying circuit in parallel to the first smoothing capacitor, thereby detecting a DC voltage between the both terminals of the first smoothing capacitor. In this construction, when the switch portion is in an open state and the DC voltage detected by the DC voltage detecting portion is not less than a predetermined value, the controller controls the inverter circuit to be driven, so that the charges of the first smoothing capacitor are discharged.

Thus, according to the first aspect, the input voltage of the DC-DC converter circuit is less affected by the inverter circuit. Further, by providing the first and second diodes connected between the first and second bridge rectifying circuits, even when the drive of the inverter circuit is stopped, the load of the DC-DC converter circuit serves as a load for the smoothing capacitor provided on the side of the inverter circuit. This enables to discharge more rapidly the smoothing capacitor.

Moreover, in the preferable aspect, since the switch portion is connected between the AC power source and the reactor, when the inverter circuit is not operated, the switch portion is made to be in an open state. Thus, it is possible to reduce a leakage current when the inverter circuit is not operated.

As described above, the air conditioner of the present invention enables the input voltage of the DC-DC converter circuit to be stable without being affected by a voltage drop due to the reactor provided on the side of the inverter circuit, and also enables the smoothing capacitor on the side of the inverter circuit to discharge rapidly with a simple configuration.

### BRIEF DESCRIPTION OF THE DRAWINGS

These and other objects and features of the present invention will be readily understood from the following detailed description taken in conjunction with preferred embodiments thereof with reference to the accompanying drawings, in which like parts are designated by like reference numerals and in which:.
Fig. 1 is a block diagram of a power supply device in an embodiment 1 of the present invention;
Fig. 2 is a block diagram of a power supply device in an embodiment 2 of the present invention;

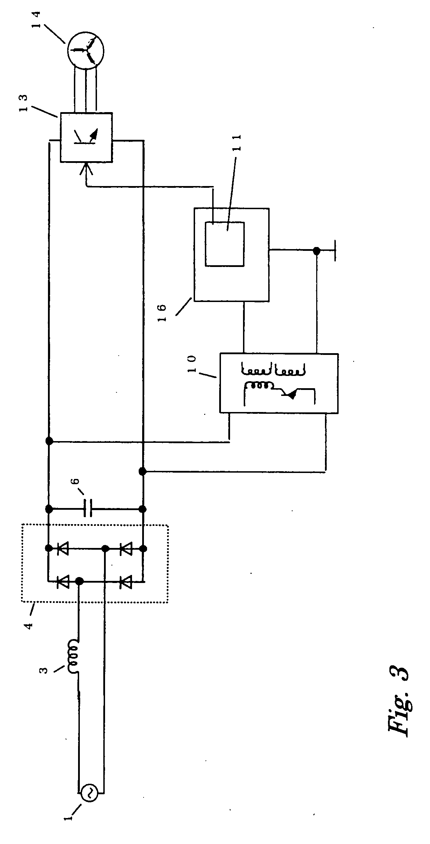

Fig. 3 is a block diagram of a first conventional air conditioner; and
Fig. 4 is a block diagram of an improved conventional air conditioner.

### DESCRIPTION OF THE PREFERRED EMBODIMENTS

Hereinafter, preferred embodiments of the present invention will be explained with reference to the drawings. Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

### (Embodiment 1)

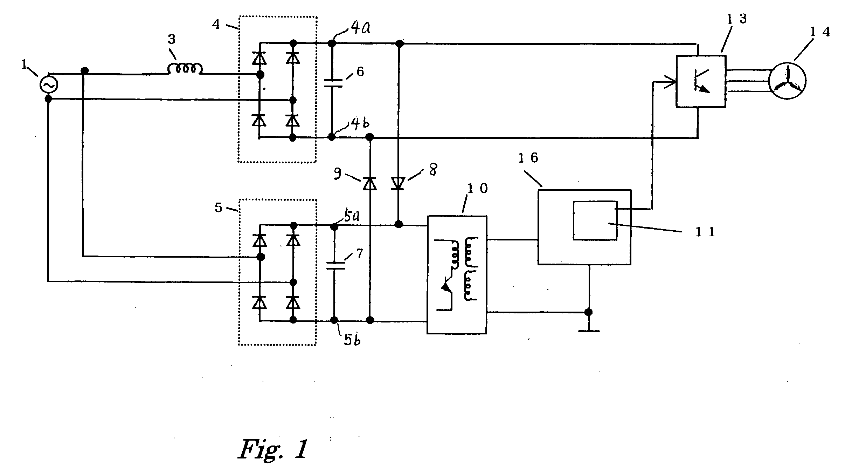

Fig. 1 is a block diagram showing an air conditioner according to a first embodiment of the present invention. In Fig. 1, an output of an AC power source 1 is connected to a first bridge rectifying circuit 4 for full-wave rectification via a reactor 3 for improving a power factor where the first bridge rectifying circuit 4 is formed of four pieces of diodes. A first smoothing capacitor 6 is connected across DC output terminals 4a and 4b of the first bridge rectifying circuit 4, and the both DC output terminals 4a and 4b are further connected to the inverter circuit 13 so that the DC voltage is supplied to the inverter circuit 13 for performing a rotational drive of a compressor motor 14 which is electrically connected to the inverter circuit 13.

The output of the AC power source 1 is also directly connected to a second bridge rectifying circuit 5 for full-wave rectification where the second bridge rectifying circuit 5 is formed of four pieces of diodes. A second smoothing capacitor 7 is connected across DC output terminals 5a and 5b of the second bridge rectifying circuit 4, and the both DC output terminals 5a and 5b are further connected to input terminals of a DC-DC converter 10 so that an input power of the DC-DC converter 10 is supplied from the DC output terminals of the second bridge rectifying circuit 5. Thus, the input voltage range of the DC-DC converter 10 is stabilized without being affected by the reactor 3. An output voltage of the DC-DC converter circuit 10 is further supplied to a controller 16 which includes an inverter driving unit 11 for driving the inverter circuit 13 so that the driving of the inverter circuit 13 is controlled.

In this configuration, a first diode 8 and a second diode 9 are connected between the DC output terminals of the first bridge rectifying circuit and the DC output terminals of the second bridge rectifying circuit. In more detail, the first diode 8 is connected in a current flow direction from the positive terminal side 4a of the DC output terminals of the first bridge rectifying circuit 4 to the positive terminal side 5a of the DC output terminals of the second bridge rectifying circuit 5. The second diode 9 is connected in a current flowing direction from the negative terminal side 5b of the DC output terminals of the second bridge rectifying circuit 5 to the negative terminal side 4b of the DC output terminals of the first bridge rectifying circuit 4.

In the configuration described above, when the power source 1 is cut off, electric charges held in the second smoothing capacitor 7 are consumed in the DC-DC converter circuit 10. When the DC voltage potential between the both terminals of the second smoothing capacitor 7 becomes lower than that of the first smoothing capacitor 6, electric charges held in the first smoothing capacitor 6 are supplied to the DC-DC converter circuit 10 via the first and second diodes 8 and 9 and the supplied charges are consumed there.

As described above, in the present embodiment, the first smoothing capacitor 6 and the second smoothing capacitor 7 are connected with each other via the first and second diodes 8 and 9 which are provided in a current flowing direction from the first smoothing capacitor to the second smoothing capacitor. Thereby, even when the drive of the inverter circuit 13 is stopped, electric charges held in the first smoothing capacitor 6 can be discharged reliably. Thus, there is no need to provide a special means for discharging the charges of the first smoothing capacitor 6 when the air conditioner is repaired or subject to maintenance, for example. This enables an easy and safe repairing or maintenance operation.

### (Embodiment 2)

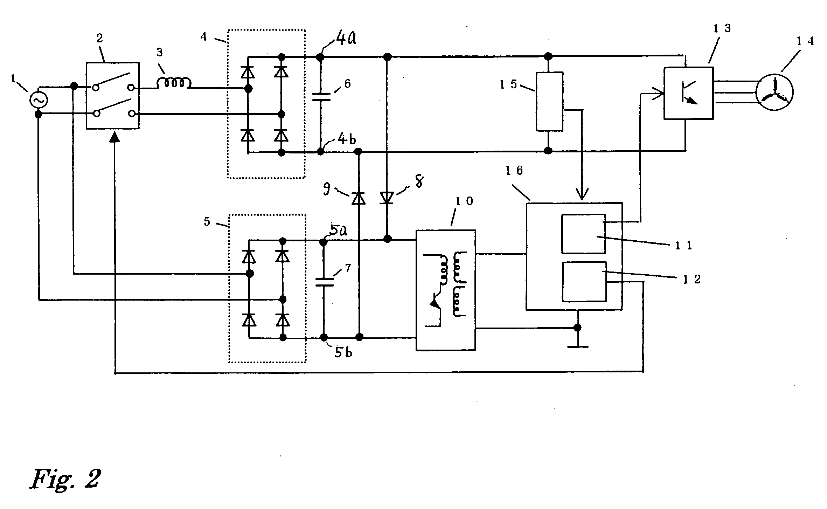

Fig. 2 is a block diagram showing an air conditioner according to a second embodiment of the present invention. In this embodiment, a main difference from the first embodiment resides in that, a switch portion is connected between a reactor and an AC power source, and when a compressor is not driven, the switch portion is cut off by means of a switch driving unit which is provided in a controller, thereby reducing a leakage current which may be caused when the compressor is not driven.

In more detail, as shown in Fig. 2, a switch portion 2 is connected between an AC power source 1 and a reactor 3 and between the AC power source and an AC input terminal of a first bridge rectifying circuit 4. Further, the DC output terminals 4a and 4b of the first bridge rectifying circuit 4 are connected to a DC voltage detecting portion 15 in parallel to a first smoothing capacitor 6 to thereby detect a DC voltage between the both terminals 4a and 4b of the first smoothing capacitor 6. The detected result of the DC voltage is inputted to a controller 16. The controller 16 includes an inverter driving unit 11 for driving an inverter circuit 13 and a switch driving unit 12 for driving the switch portion 2.

In this configuration, similarly to the first embodiment, a first diode 8 and a second diode 9 are connected between the DC output terminals (4a, 4b) of the first bridge rectifying circuit 4 and the DC output terminals (5a, 5b) of the second bridge rectifying circuit 5.

Next, the operation of the air conditioner shown in Fig. 2 is described below. When the drive of the inverter circuit 13 is stopped, the controller 16 detects the stop of the drive by a compressor motor revolution detector (not shown) and cuts off the switch portion 2 by means of the switch driving unit 12. Thus, the electric conduction from the AC power source 1 to the first bridge rectifying circuit 4 is cut off. Further, in the case where the DC voltage between the both terminals (4a, 4b) the first smoothing capacitor 6 detected by the DC voltage detecting unit 15 is not less than a predetermined voltage while the switch portion 2 is cut off, the controller 16 controls the inverter circuit 13 to be driven by means of the inverter driving unit 11.

Thus, when the drive of the inverter circuit 13 is stopped, it is possible to prevent a leakage current from being caused by a stray capacitance (not shown) between the compressor 14 and the ground (not shown). Further, it is also possible to rapidly discharge electric charges held in the first smoothing capacitor 6. Moreover, by providing the first and second diodes 8 and 9 connected between the DC output terminals of the first bridge rectifying circuit 4 and the DC output terminals of the second bridge rectifying circuit 5, even in the case where the AC power source 1 is cut off and the DC voltage between the both terminals of the second smoothing capacitor 7 drops so that the controller 16 does not operate, the electric charges held in the first smoothing capacitor 6 can be discharged. In such a case, the operation is same as that of the first embodiment, so the explanation thereof is omitted here.

As described above, in the first aspect of the present invention, the first bridge rectifying circuit for supplying DC voltage to the inverter circuit and the second bridge rectifying circuit for supplying DC voltage to the DC-DC converter circuit are separated, and both of the DC terminals thereof are connected via the first and second diodes. Thus, even when the inverter circuit is stopped in driving, the load of the DC-DC converter circuit serves as the load shared by the first bridge rectifying circuit and the second bridge rectifying circuit, whereby the charges of the first smoothing capacitor connected with the first bridge rectifying circuit can be rapidly discharged.

In the second aspect of the present invention, the switch portion is connected between the first bridge rectifying circuit and the AC power source, and the DC voltage detecting unit is connected between the both terminals of the first smoothing capacitor. By this arrangement, when the switch portion is in an open state and the voltage between the both terminals of the first smoothing capacitor is not less than a predetermined voltage, the inverter circuit is operated. Thus, the charges of the first smoothing capacitor can rapidly discharged even in the case where the load of the DC-DC converter circuit is small.

As described above, the air conditioner according to the present invention enables the first smoothing capacitor to discharge rapidly in the case where the AC power source is cut off. Therefore, the present invention is useful as an air conditioner for which repairing or maintenance operation is performed while cutting off the AC power source.

## Claims

1. An air conditioner comprising:
a first bridge rectifying circuit (4) for full-wave rectification of an output voltage of an AC power source (1) supplied through a reactor (3) for improving a power factor;
a second bridge rectifying circuit (5) for full-wave rectification directly supplied with an output voltage from the AC power source (1);
a first smoothing capacitor (6) connected between DC output terminals (4a, 4b) of the first bridge rectifying circuit (4);
a second smoothing capacitor (7) connected between DC output terminals (5a, 5b) of the second bridge rectifying circuit (5);
an inverter circuit (13) connected to the DC output terminals (4a, 4b) of the first bridge rectifying circuit (4) for driving a compressor (14);
a DC-DC converter circuit (10) connected to the DC output terminals (5a, 5b) of the second bridge rectifying circuit (5); and
a controller (16) for controlling a drive of the inverter circuit (13), said controller being connected to the DC output terminals (5a, 5b) of the second bridge rectifying circuit (5) via the DC-DC converter circuit (10), thereby supplying electric power to the DC-DC converter circuit (10) and the controller (16),
**characterized by** comprising first and second diodes (8, 9) which are connected between the DC output terminals (4a, 4b; 5a, 5b) of the first and second bridge rectifying circuits (4, 5), wherein the first diode (8) is connected in a current flowing direction from a positive terminal side (4a) of the DC output terminals of the first bridge rectifying circuit (4) to a positive terminal side (5a) of the DC output terminals of the second bridge rectifying circuit (5), and the second diode (9) is connected in a current flowing direction from a negative terminal side (5b) of the DC output terminals of the second bridge rectifying circuit (5) to a negative terminal side (4b) of the DC output terminals of the first bridge rectifying circuit (4).

2. The air conditioner as claimed in claim 1, further comprising:
a switch portion (2) connected between the AC power source (1) and the reactor (3); and
a DC voltage detecting portion (15) connected to the DC output terminals (4a, 4b) of the first bridge rectifying circuit (4) in parallel to the first smoothing capacitor (6), thereby detecting a DC voltage between the both terminals of the first smoothing capacitor (6),
wherein when the switch portion (2) is in an open state and the DC voltage detected by the DC voltage detecting portion (15) is not less than a predetermined value, the controller (16) controls the inverter circuit (13) to be driven, so that the charges of the first smoothing capacitor (6) are discharged.

3. The air conditioner as claimed in claim 1 or 2, wherein the first smoothing capacitor (6) and the second smoothing capacitor (7) are connected with each other via the first and second diodes (8, 9) which are provided in a current flowing direction from the first smoothing capacitor to the second smoothing capacitor.
